# EUROPÄISCHE PATENTSCHRIFT

(11) **EP 4 351 886 B1**
(45) Veröffentlichungstag und Bekanntmachung des Hinweises auf die Patenterteilung: **11.06.2025**
(21) Anmeldenummer: 21844190.5
(22) Anmeldetag: 17.12.2021
(51) Int. Cl.: B60C 11/03, B60C 11/12

(54) **FAHRZEUGLUFTREIFEN**
PNEUMATIC TIRE FOR A VEHICLE
PNEUMATIQUE POUR UN VÉHICULE

(30) Priorität: 08.06.2021 DE 102021205792
(43) Veröffentlichungstag der Anmeldung: 17.04.2024
(73) Patentinhaber: Continental Reifen Deutschland GmbH, 30175 Hannover (DE)
(72) Erfinder: EIKERMANN, Wilke, 30165 Hannover (DE); KRISTEN, Florian, 30165 Hannover (DE); STEINLÜKE, Frank, 30165 Hannover (DE); WÜST, Alexander, 30165 Hannover (DE)
(74) Vertreter: Continental Corporation
(86) Internationale Anmeldenummer: PCT/DE2021/200266
(87) Internationale Veröffentlichungsnummer: WO 2022/258089

(56) Entgegenhaltungen:
- EP-A1- 2 644 408
- WO-A1-2020/128271
- DE-A1- 102010 017 702
- DE-A1- 102013 107 161
- DE-A1- 102017 208 010
- DE-A1- 102018 208 349
- DE-A1- 102018 217 712
- JP-A- 2006 168 462
- US-A1- 2011 168 311

## Beschreibung

Die Erfindung betrifft einen Fahrzeugluftreifen, insbesondere einen Nutzfahrzeugreifen, mit einem Laufstreifen mit mindestens einer an zumindest einer ihre Seite von einer Umfangsrille begrenzten Profilrippe, wobei die Umfangsrille, im Querschnitt betrachtet, einen in radialer Richtung verlaufenden Abschnitt mit einer Breite von bis zu 3,0 mm und einen an diesen anschließenden radial inneren Kanalbereich aufweist, wobei der radial innere Kanalbereich von zwei Kanalwänden und einem den Rillengrund bildenden Kanalgrund begrenzt ist und - jeweils gegenüber dem in radialer Richtung verlaufenden Abschnitt - eine größere Querschnittsfläche aufweist und breiter ausgeführt ist, wobei die Profilrippe über ihren Umfang mit in die Umfangsrille einmündenden, zur axialen Richtung unter einem Winkel von 0° bis 50° verlaufenden sowie Einschnittwände aufweisenden Einschnitten versehen ist, wobei jeder Einschnitt durch zumindest einen zur Laufstreifenperipherie offenen, in den radial inneren Kanalbereich der Umfangsrille einmündenden Kanal lokal verbreitert ist, wobei der Kanal von einer an der einen Einschnittwand ausgebildeten Vertiefung und einer dieser gegenüberliegenden an der anderen Einschnittwand ausgebildeten Vertiefung gebildet ist.

Umfangsrillen mit einschnittartig schmalen, in radialer Richtung verlaufenden Abschnitten und im Inneren des Laufstreifens befindlichen, den Rillengrund aufweisenden, wesentlich breiter als der schmale Abschnitt ausgeführten Kanalbereichen sind vor allem im zentralen bzw. mittleren Laufstreifenbereich für einen geringen Rollwiderstand des Reifens von Vorteil. Beim Abrollen des Reifens am Untergrund stützen sich die durch die Umfangsrille getrennten Profilrippen im Bereich der einschnittartig schmalen Abschnitte aneinander ab, was zu einer Verringerung der Rollwiderstandes beiträgt. Der Kanal sorgt bei weiter abgeriebenem Laufstreifen für gute Bremseigenschaften auf nasser Fahrbahn.

Ein Fahrzeugluftreifen der eingangs genannten Art, welcher ein Nutzfahrzeugreifen ist, ist beispielsweise aus der WO 2020/128271 A1 bekannt. Der Reifen weist einen Laufstreifen mit zwei durch eine Umfangsrille voneinander getrennte Profilrippen auf, wobei die Umfangsrille, im Querschnitt betrachtet, einen in radialer Richtung verlaufenden, radial äußeren, einschnittförmigen Abschnitt mit einer Breite von kleiner 3,0 mm und einen an diesen anschließenden radial inneren Kanalbereich aufweist. Der radial innere Kanalbereich ist rechteckig ausgeführt und von zwei Kanalwände sowie einem den Rillengrund bildenden Kanalgrund begrenzt, wobei die Kanalwände - entsprechend der rechteckigen Ausführung - aus je zwei Wandabschnitten zusammengesetzt sind. Die eine Profilrippe ist mit in die Umfangsrille einmündenden, in axialer Richtung verlaufenden Einschnitten versehen, welche jeweils durch einen zur Laufstreifenperipherie offenen, in den radial inneren Kanalbereich einmündenden Kanal lokal verbreitert sind, wobei der Kanal den Einschnitt im Inneren der Profilrippe umläuft und aus an den Einschnittwänden ausgebildeten Vertiefungen gebildet ist. Der Reifen soll unter Aufrechterhaltung einer hohen Profilsteifigkeit eine gute Nässeperformance aufweisen.

Die DE 10 2017 208 010 A1 offenbart einen Fahrzeugluftreifen, welcher vorzugsweise ein Nutfahrzeugreifen ist, , wobei der Laufstreifen des Reifens zumindest eine Umfangsrille aufweist, welche sich, im Querschnitt betrachtet, aus einem sich trichterförmig nach außen erweiternden, radial äußeren Abschnitt, einem in radialer Richtung verlaufenden mittleren Abschnitt mit einer Breite von 1,0 mm bis 3,0 mm und einem radial inneren Kanalbereich mit größerer Querschnittsfläche als jene im mittleren Abschnitt zusammensetzt. Der Kanalbereich weist zwei Kanalwände mit radial inneren Wandabschnitten auf, welche unter Verringerung ihres gegenseitigen Abstandes zum Kanalgrund unter einem Winkel von 5° bis 25° zur radialen Richtung verlaufen und in Richtung ihrer Umfangserstreckung in einer Wellenform verlaufen. Durch die Wellenform bilden sich nach entsprechendem Laufstreifenabrieb an der Laufstreifenperipherie Rillenkanten mit einer - gegenüber gerade verlaufenden Rillenkanten - größeren Kantenlänge aus, wodurch die Griff- und Bremseigenschaften auf nasser Fahrbahn verbessert sind.

Aus der DE 10 2013 107 161 A1 ist ein Fahrzeugluftreifen mit einem Laufstreifen mit Profilrippen bekannt, welche durch auf Profiltiefe ausgeführte Umfangsrillen voneinander getrennt und jeweils mit einer Umfangsnut mit einer Tiefe von zumindest 0,5 mm und höchstens einem Drittel der Profiltiefe versehen sind. Die Profilrippe ist von Einschnitten durchquert, welche jeweils von einem beispielsweise verkehrt T-förmigen, in die Umfangsrillen einmündenden Kanal verbreitert sind. Der Kanal soll unter Aufrechterhaltung einer guter Trockenhandlingperformance die Aquaplaningeigenschaften verbessern.

Die EP 2 644 408 A1 offenbart einen Fahrzeugluftreifen, insbesondere einen Nutfahrzeugreifen, mit durch Rillen begrenzten Profilpositiven, welche von in Draufsicht in axialer Richtung verlaufenden Einschnitten durchquert sind. Die Einschnitte münden jeweils in einen in einer konstanten Tiefe verlaufenden, rohrförmigen Kanal ein, auf dessen Kanalgrund mehrere kuppelförmige Erhebungen ausgebildet sind. Dieser Lauftreifen soll eine im Hinblick auf den Abrieb und den Rollwiderstand vorteilhafte hohe Steifigkeit aufweisen, wobei bei entsprechend fortgeschrittenem Laufstreifenabrieb die Kanäle ein zusätzliches Leervolumen zur Wasseraufnahme zur Verfügung stellen. Die kuppelförmigen Erhebungen sollen den Rillengrund vor eindringenden Fremdkörpern, beispielsweise vor kleinen Steinen, schützen.

Die DE 10 2018 208 349 A1 offenbart einen Fahrzeugluftreifen mit einem Laufstreifen mit einer schulterseitigen Profilrippe, welche mit in die angrenzende Umfangsrille einmündenden Querrillen versehen ist, wobei zwischen den Enden der Querrillen und der Umfangsrille jeweils einen Draufsicht zumindest über den Großteil seiner Erstreckung sägezahnförmig verlaufender Einschnitt ausgebildet ist. Bevorzugter Weise mündet der Einschnitt über seine gesamte Erstreckung in einen im Inneren der Profilrippe sowie zwischen der Querrille und der Umfangsrille verlaufenden Kanal ein. Der Einschnitt blockiert bzw. begrenzt unter axialer Belastung die gegenseitige Beweglichkeit der blockartigen Strukturen der Profilrippe, wodurch die Übertragung von Seitenführungskräften verbessert ist. Unter in Umfangsrichtung wirkenden Kräften kann der Einschnitt beim Durchlaufen des Footprints auf vorteilhafte Weise aufklappen. Der Kanal verbessert die Wasserableitung beim Fahren auf nasser Fahrbahn.

Aus der DE 10 2018 217 712 A1 ist ein Fahrzeugreifen mit einem Laufstreifen mit durch Umfangsrillen oder Schrägrillen begrenzten Profilpositiven bekannt, welche mit zur axialen Richtung unter einem Winkel von bis zu 45° verlaufenden Einschnitten versehen sind, die an den Einschnittwänden jeweils eine zur Laufstreifenperipherie reichende Vertiefung aufweisen. Die Vertiefungen bilden miteinander einen Kanal mit einem zur Laufstreifenperipherie verlaufenden Kanalabschnitt und einem radial innerhalb der Laufstreifenperipherie verlaufenden, in zumindest eine Umfangsrille bzw. Schrägrille einmündenden Kanalabschnitt. Solche Einschnitte weisen eine gute Entwässerungswirkung auf.

Die DE 10 2010 017 702 A1 offenbart einen PKW-Fahrzugluftreifen mit einem Laufstreifen mit einer schulterseitigen Profilrippe, welche durch eine Umfangsrille begrenzt und mit Querrillen versehen ist. Die an der Umfangsrille liegende Rippenflanke ist mit von der Laufstreifenperipherie beabstandeten, strömungsoptimierten Aussparungen versehen. Zwischen den Querrillen und den Aussparungen verlaufen Einschnitte, welcher im Inneren der Profilrippe in einen sich zwischen der jeweiligen Querrille und der jeweiligen Aussparung erstreckenden, tunnelförmigen, radial innerhalb der Laufstreifenperipherie verlaufenden Kanal einmünden. Der Fahrzeugluftreifen soll ein gutes Aquaplaningverhalten und ein geringes Reifen-Fahrbahn-Geräusch aufweisen.

Aus der US 2011/0168311 A1 ist ein Fahrzeugluftreifen mit einem Laufstreifen mit einer mittleren Profilrippen bekannt, welche mit einem Einschnitt-Kanal-Netz versehen ist. Das Einschnitt-Kanal-Netz ist aus sich in Draufsicht in Umfangsrichtung erstrecken Einschnitten und sich in Draufsicht in axialer Richtung erstreckenden Einschnitten gebildet, wobei die Einschnitte im Inneren der Profilrippe jeweils über ihre komplette Erstreckung in Kanäle einmünden.

Die JP 2006 168 462 A offenbart einen Fahrzeugluftreifen mit einem Laufstreifen mit einer beidseitig von je einer Umfangsrille begrenzten, mittleren Profilrippe, welche von Einschnitten durchquert ist, die jeweils mit zwei von der Profilrippenaußenfläche zu den Umfangsrillen verlaufenden Kanälen verbreitert sind.

Bei Fahrzeugluftreifen der eingangs genannten Art ist bei neuem bzw. wenig abgefahrenem Reifen, bedingt durch den schmalen, in radialer Richtung verlaufenden Abschnitt der Umfangsrille, das Entwässerungsverhalten des Laufstreifens, insbesondere im Bereich der an die Umfangsrille angrenzenden Profilrippen, verbesserungswürdig. Dies beeinträchtigt die Reifenperformance auf nasser Fahrbahn, insbesondere die Griff- und Bremseigenschaften.

Der Erfindung liegt daher die Aufgabe zugrunde, bei einem Fahrzeugluftreifen der eingangs genannten Art das Entwässerungsverhalten des Laufstreifens weiter zu verbessern, wobei die vorteilhafte Wirkung der Umfangsrillen auf den Rollwiderstand des Reifens erhalten bleiben soll.

Gelöst wird die gestellte Aufgabe erfindungsgemäß dadurch, dass die Einschnitte eine Breite von 0,4 mm bis 1,2 mm und eine maximale Tiefe von 70% bis 100% der Profiltiefe aufweisen, wobei jeder Einschnitt an der Laufstreifenperipherie eine in Draufsicht über seine gesamte Erstreckung verlaufende, nutförmige Einschnittverbreiterung mit einem Boden, einer in radialer Richtung ermittelten Tiefe von 10% bis 30% der maximalen Tiefe des Einschnittes und einer Breite von 250% bis 370% der Breite des Einschnittes aufweist, wobei der Kanal vom Boden der Einschnittverbreiterung ausgeht.

Durch die in den Einschnitten ausgebildeten Kanäle werden beim Abrollen des Reifens auf Nässe Wasserableitwege zwischen der Außenfläche der Profilrippe und dem radial inneren Kanalbereich der Umfangsrille zur Verfügung gestellt. Beim Fahren auf nasser Fahrbahn wird aufgenommenes Wasser von der Außenfläche der Profilrippe über die Kanäle in den Einschnitten in den radial inneren Kanalbereich der Umfangsrille besondere effektiv abgeleitet. Die vorteilhafte Wirkung der Umfangsrillen im Hinblick auf den Rollwiderstand des Reifens bleibt davon unbeeinflusst.

Die nutförmige Einschnittverbreiterung begünstigt die Wasseraufnahme von der Außenfläche der Profilrippe zusätzlich, wobei das Wasser über die Kanäle wie beschrieben abgeleitet wird. Die nutförmige Einschnittverbreiterung trägt daher zu einer weiteren Verbesserung der Entwässerungsperformance bei.

Gemäß einer bevorzugten Ausführung ist vorgesehen, dass die Tiefe der Einschnittverbreiterung 15% bis 25% der maximalen Tiefe des Einschnittes und die Breite der Einschnittverbreiterung 290% bis 330% der Breite des Einschnittes beträgt.
Gemäß einer weiteren bevorzugten Ausführung weist der Kanal einen kreisförmigen Querschnitt mit einem Durchmesser von 250% bis 370%, insbesondere von 290% bis 330%, der Breite des Einschnittes auf. In solchen Kanälen werden die beim Fahren auf nasser Fahrbahn aufgenommen Wassermengen besonders effizient in die Umfangsrille abgeleitet.

Besonders bevorzugt ist eine Kombination der beiden oben erwähnten Ausführungen, bei welcher der Durchmesser des Kanals mit der Breite der Einschnittverbreiterung übereinstimmt. Dies verbessert das Zusammenwirken von Kanal und Einschnittverbreiterung im Hinblick auf die Entwässerungswirkung.

Ein verwirbelungsfreier bzw. im Wesentlichen verwirbelungsfreier Wasserfluss durch den Kanal ist gewährleistet, wenn der Kanal, bei Sicht auf die Einschnittwand, halb U-förmig verläuft.

Gemäß einer weiteren bevorzugten Ausführung beträgt die Breite des in radialer Richtung verlaufenden Abschnittes der Umfangsrille, welche die Profilrippe an einer Seite begrenzt, 0,5 mm bis 2,5 mm, besonders bevorzugt von 0,8 mm bis 1,2 mm.

Die erfindungsgemäß vorgesehenen Einschnitte mit Kanälen sind besonders vorteilhaft, wenn die zugehörige Profilrippe an ihrer zweiten Seite ebenfalls von einer Umfangsrille begrenzt ist. Die Profilrippe ist daher eine zentrale bzw. mittlere Profilrippe, befindet sich daher komplett innerhalb der Bodenaufstandsfläche, sodass die Einschnitte mit den Kanälen das Entwässerungsverhaltens des Laufstreifens besonders deutlich verbessern.

Bei der unmittelbar zuvor genannten, bevorzugten Ausgestaltung ist es günstig, wenn die Umfangsrille, welche die zumindest eine Profilrippe an ihrer zweiten Seite begrenzt, im Querschnitt betrachtet, ebenfalls einen in radialer Richtung verlaufenden Abschnitt mit einer Breite von bis zu 3,0 mm und einen an diesen anschließenden radial inneren Kanalbereich mit zwei Kanalwänden und einem den Rillengrund bildenden Kanalgrund aufweist, wobei der Kanalbereich - jeweils gegenüber dem in radialer Richtung verlaufenden Abschnitt - eine größere Querschnittsfläche aufweist und breiter ausgeführt ist, wobei die in der Profilrippe ausgebildeten Einschnitte bezüglich einer in radialer Richtung ausgerichteten Querschnitt-Mittelebene, welche - bezogen auf die Längserstreckung - durch die Mitte des Einschnittes verläuft, symmetrisch gestaltet sind. Diese Ausgestaltung gestattet eine besonders gleichmäßig verbesserte Entwässerung der Profilrippe.

Im Zusammenhang mit der zuvor erwähnten bevorzugten Ausgestaltung ist es für die Entwässerung von weiterem Vorteil, wenn zwischen den Kanälen ein insbesondere in einer konstanten Tiefe verlaufender, den Einschnitt lokal verbreiternder Verbindungskanal ausgebildet ist, welcher sowohl zur Laufstreifenperipherie als auch zum Einschnittgrund in radialer Richtung jeweils einen Abstand aufweist. Durch diesen Verbindungskanal ist vor allem bei Kurvenfahrt auf nasser Fahrbahn die Entwässerung der Profilrippe weiter verbessert.

Bei den beiden zuletzt erwähnten Ausführungen ist es von Vorteil, wenn die Breite des in radialer Richtung verlaufenden Abschnittes der Umfangsrille, welche die zumindest eine Profilrippe an ihrer zweiten Seite begrenzt, 0,5 mm bis 2,5 mm, bevorzugt von 0,8 mm bis 1,2 mm, beträgt.

Eine weitere bevorzugte Ausführung ist dadurch gekennzeichnet, dass die Umfangsrille(n), welche den in radialer Richtung verlaufenden Abschnitt und den radial inneren Kanalbereich aufweist bzw. aufweisen, an den Einmündungen der Einschnitte mit in Draufsicht kreisförmigen, in radialer Richtung verlaufenden, bis zum radial inneren Kanalbereich reichenden, zur Laufstreifenperipherie geöffneten Aussparungen mit einem Durchmesser von 200% bis 400%, insbesondere von 330% bis 370%, der Breite des in radialer Richtung verlaufenden Abschnittes versehen sind, wobei die Aussparungen jeweils aus in axialer Richtung einander paarweise gegenüberliegenden Einbuchtungen gebildet sind. Die Aussparungen verbessern die Entwässerung der jeweils angrenzenden Profilrippen. Im Zusammenhang mit der Lösung der Aufgabe bedeutet dies, dass die Kanäle in der Umfangsrille und die Kanäle in den Einschnitten an im Wesentlichen übereinstimmenden "Umfangspositionen" der Umfangsrille in den radial inneren Kanalbereich der Umfangsrille einmünden. Dies ist vor allem für das Wasserdrainageverhalten im radial inneren Kanalbereich der Umfangsrille günstig.

Gemäß einer weiteren bevorzugten Ausführung setzen sich die Kanalwände des radial inneren Kanalbereiches der Umfangsrille(n) jeweils aus einem radial inneren Wandabschnitt und einem radial äußeren Wandabschnitt zusammen, wobei die radial inneren Wandabschnitte, im Querschnitt durch die Umfangsrille betrachtet, zur radialen Richtung jeweils unter einem Winkel von 5° bis 15°, insbesondere von bis 10°, verlaufen, wobei diese Wandabschnitte derart gegensinnig zueinander geneigt sind, dass sich der radial innere Kanalbereich vom radial inneren Ende der radial inneren Wandabschnitte zum radial äußeren Ende der radial inneren Wandabschnitte in axialer Richtung kontinuierlich verbreitert, wobei der Kanal bzw. die Kanäle, welche(r) den Einschnitt verbreitert bzw. verbreitern, über den radial inneren Wandabschnitt in den radial inneren Kanalbereich der Umfangsrille(n) einmündet bzw. einmünden.

Für die Entwässerung des Laufstreifens ist es ferner zusätzlich vorteilhaft, wenn sich die Umfangsrille(n), welche den in radialer Richtung verlaufenden Abschnitt und den radial inneren Kanalbereich aufweist bzw. aufweisen, aus dem in radialer Richtung verlaufenden Abschnitt, dem radial inneren Kanalbereich und einem sich V-förmig zur Laufstreifenperipherie verbreiternden, radial äußeren Abschnitt zusammensetzt bzw. zusammensetzen.

Gemäß einer weiteren bevorzugten Ausführung weist der Kanal eine Hauptachse und eine radial äußere Kanalöffnung auf, wobei die radial äußere Kanalöffnung - bezogen auf die Hauptachse - zur Umfangsrille, in welche der Kanal einmündet, einen in die Laufstreifenperipherie projizierten in axialer Richtung ermittelten Abstand von 10% bis 40%, insbesondere von 15% bis 30%, besonders bevorzugt von 20% bis 25%, der an der Laufstreifenperiphere in axialer Richtung ermittelten Breite der Profilrippe aufweist.

Ferner ist es für die Stabilisierung des Kanals von Vorteil, wenn die Einschnitte jeweils einen Einschnittgrund sowie pro Kanal eine an diesen angrenzende, den Einschnittgrund lokal in radialer Richtung anhebende Grundanhebung aufweisen.

Weitere Merkmale, Vorteile und Einzelheiten der Erfindung werden nun anhand der Zeichnung, die schematisch Ausführungsbeispiele zeigt, näher beschrieben. Dabei zeigen
Fig. 1 eine vereinfachte Draufsicht auf einen Umfangsabschnitt eines Laufstreifens eines Nutzfahrzeugreifens mit einer ersten Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 eine weiter vergrößerte Ansicht des Details Z₄ der Fig. 3,
Fig. 5 eine Visualisierung eines Einschnittes gemäß einer zweiten Ausführungsvariante der Erfindung,
Fig. 6 eine Visualisierung eines Einschnittes gemäß einer dritten Ausführungsvariante, welche nicht unter den Wortlaut der Ansprüche fällt, und
Fig. 7 eine Visualisierung eines Einschnittes gemäß einer vierten Ausführungsvariante, welche ebenfalls nicht unter den Wortlaut der Ansprüche fällt.

Gemäß der Erfindung ausgeführte Fahrzeugluftreifen sind Reifen für Kraftfahrzeuge, insbesondere für mehrspurige Kraftfahrzeuge, sowie vorzugsweise Nutzfahrzeugreifen in Radialbauart für LKWs (mittelschwere LKWs: 7,5 t < zGM ≤ 18,0 t, schwere LKWs: zGM > 18,0 t).

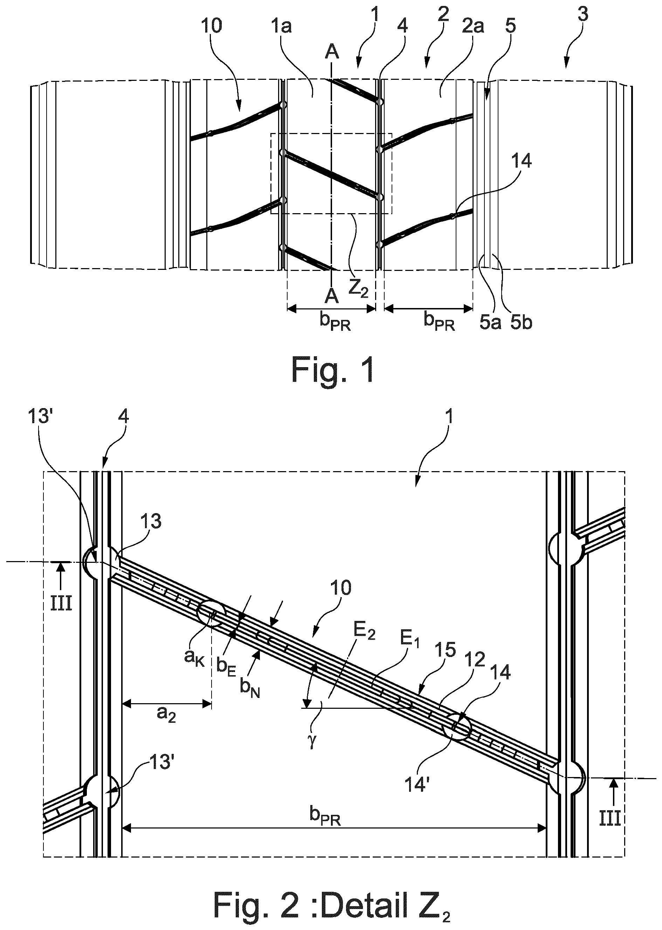

Fig. 1 zeigt eine Draufsicht auf einen Umfangsabschnitt eines Laufstreifens eines Nutzfahrzeugreifens. Die Reifenäquatorialebene ist durch eine Linie A-A angedeutet. Der Laufstreifen weist eine zentrale Profilrippe 1, zwei mittlere Profilrippen 2 und zwei schulterseitige Profilrippen 3 auf, wobei die zentrale Profilrippe 1 zu den mittleren Profilrippen 2 durch mittlere Umfangsrillen 4 und die mittleren Profilrippen 2 zu den schulterseitigen Profilrippen 3 durch schulterseitige Umfangsrillen 5 getrennt sind. Die schulterseitigen Profilrippen 3 sind lediglich schematisch dargestellt und können mit Rillen, Einschnitten und dergleichen strukturiert sein.

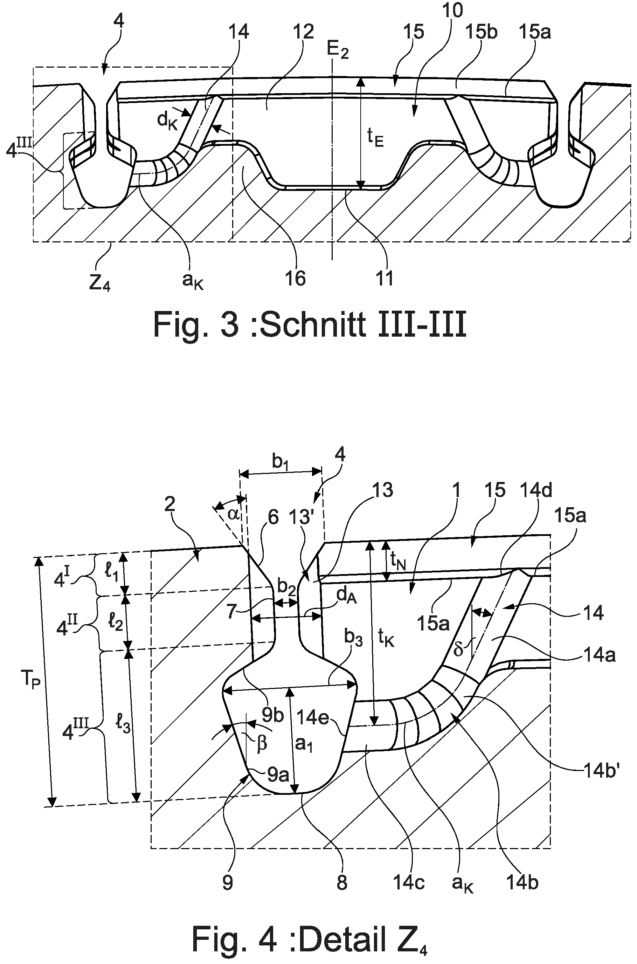

Die Umfangsrillen 4, 5 verlaufen beim gezeigten Ausführungsbeispiel in Draufsicht gerade und sind in radialer Richtung auf die jeweils vorgesehene Profiltiefe T_{P} (Fig. 4, gezeigt für eine mittlere Umfangsrille 4) ausgeführt, welche für den bevorzugten Reifentyp (Nutzfahrzeugreifen) üblicherweise 12,0 mm bis 26,0 mm beträgt.

Die schulterseitigen Umfangsrillen 5 weisen einen U-förmigen Querschnitt auf (nicht zu sehen) und sind jeweils durch einen Rillengrund 5a und zwei Rillenflanken 5b begrenzt.

Gemäß Fig. 4 setzen sich die mittleren Umfangsrillen 4, im Querschnitt und in radialer Richtung betrachtet, jeweils aus einem radial äußeren Abschnitt 4^{I}, einem mittleren Abschnitt 4^{II} und einem radial inneren Kanalbereich 4^{III} zusammen, wobei beim gezeigten Ausführungsbeispiel die Abschnitte 4^{I}, 4^{II} mit lokalen, in radialer Richtung verlaufenden, paarweise ausgebildeten Einbuchtungen 13 (vergl. Fig. 2) versehen sind. Auf die Ausgestaltung der Einbuchtungen 13 wird später noch genauer eingegangen.

Der radial äußere Abschnitt 4^{I} verbreitert sich V-förmig zur Laufstreifenperipherie, ist durch zwei Flanken 6 begrenzt, welche, im Querschnitt betrachtet, zur radialen Richtung unter einem Winkel α von 30° bis 50° verlaufen, weist an der Laufstreifenperipherie in axialer Richtung eine Breite b₁ von 2,5 mm bis 6,0 mm und in radialer Richtung eine Erstreckungslänge l₁ von 10% bis 30% der Profiltiefe T_{P} auf. Der mittlere Abschnitt 4^{II} ist durch zwei in radialer Richtung verlaufende Flanken 7 begrenzt, weist in axialer Richtung eine Breite b₂ von bis zu 3,0 mm, insbesondere von 0,5 mm bis 2,5 mm, besonders bevorzugt von 0,8 mm bis 1,2 mm, und in radialer Richtung eine Erstreckungslänge l₂ von 30% bis 60% der Profiltiefe T_{P} auf. Der radial innere Kanalbereich 4^{III} weist eine größere in axialer Richtung ausgerichtet Querschnittsfläche als der mittlere Abschnitt 4^{II} auf, ist in axialer Richtung breiter als dieser ausgeführt, weist in radialer Richtung eine Erstreckungslänge l₃ von 30% bis 60% der Profiltiefe T_{P} auf und ist von einem auf Profiltiefe T_{P} verlaufenden, gleichzeitig den Rillengrund der Umfangsrille 4 bildenden Kanalgrund 8 sowie von in die zentrale Profilrippe 1 bzw. die angrenzende mittlere Profilrippe 2 hineingewölbten, seitlichen Kanalwänden 9 begrenzt. Die Kanalwände 9 setzen sich jeweils aus einem radial inneren Wandabschnitt 9a und einem radial äußeren Wandabschnitt 9b zusammen. Die radial inneren Wandabschnitte 9a verlaufen, im Querschnitt durch die Umfangsrille 4 betrachtet, zur radialen Richtung jeweils unter einem Winkel β von 5° bis 15°, insbesondere von bis zu 10°, wobei sie derart gegensinnig zueinander geneigt sind, dass sich der Kanalbereich 4^{III} vom radial inneren Ende der Wandabschnitte 9a zum radial äußeren Ende der Wandabschnitte 9a in axialer Richtung kontinuierlich verbreitert. Der Kanalbereich 4^{III} weist seine in axialer Richtung breiteste Stelle zwischen den Übergängen der radial inneren Wandabschnitte 9a zu den radial äußeren Wandabschnitten 9b auf, wobei sich diese Stelle vom tiefsten Punkt der Umfangsrille 4 in einem in radialer Richtung ermittelten Abstand a₁ von 70% bis 85% der bereits erwähnten, zum Kanalbereich 4^{III} gehörenden Erstreckungslänge l₃ befindet. An der breitesten Stelle weist der Kanalbereich 4^{III} eine Breite b₃ von 5,0 mm bis 7,0 mm auf.

Gemäß Fig. 1 weist die zentrale Profilrippe 1 und jede mittlere Profilrippe 2 eine an der Laufstreifenperipherie in axialer Richtung ermittelte Breite b_{PR} auf und ist mit einer Vielzahl von über den Umfang der Profilrippe 1, 2 verteilten, in Draufsicht innerhalb der jeweiligen Profilrippe 1, 2 parallel zueinander verlaufenden Einschnitten 10 versehen, welche die Profilrippe 1, 2 durchqueren und dieser Rippenblöcke 1a bzw. 2a verleihen. Gemäß Fig. 2 ist jeder Einschnitt 10 bezüglich einer in radialer Richtung ausgerichteten Längsschnitt-Mittelebene E₁, welche in Längserstreckung durch die Mitte des Einschnittes 10 verläuft, symmetrisch ausgeführt. Ferner ist jeder Einschnitt 10 bezüglich einer in radialer Richtung ausgerichteten Querschnitt-Mittelebene E₂ (vergl. Fig. 3), welche orthogonal zur Längsschnitt-Mittelebene E₁ sowie bezogen auf die Längserstreckung durch die Mitte des Einschnittes 10 verläuft, symmetrisch gestaltet. Die Einschnitte 10 verlaufen - in Draufsicht betrachtet und bezogen auf die Längsschnitt-Mittelebene E₁ - zur axialen Richtung unter einem Winkel γ von 0° bis 50°, insbesondere von 5° bis 40°, bevorzugt von 20° bis 35°, wobei die Einschnitte 10 in den mittleren Profilrippen 2 zu den Einschnitten 10 in der zentralen Profilrippe 1 bezüglich der axialen Richtung gegensinnig geneigt sind (Fig. 1).

Die weitere Ausgestaltung der Einschnitte 10 wird nachfolgend anhand eines einzelnen, in der mittleren Profilrippe 1 ausgebildeten Einschnittes 10 erläutert.

Wie Fig. 2 und Fig. 3 in Kombination zeigen, weist der Einschnitt 10 einen Einschnittgrund 11 (Fig. 3) und zwei einander gegenüberliegende, in radialer Richtung verlaufende Einschnittwände 12 (Fig. 2) auf, ist von zwei zu den mittleren Umfangsrillen 4 verlaufenden, rohrförmigen Kanälen 14 verbreitert und weist an der Laufstreifenperipherie ferner eine nutförmige Einschnittverbreiterung 15 auf. Der Einschnitt 10 weist zwischen den Einschnittwänden 12 - also im Bereich außerhalb der Kanäle 14 und der Einschnittverbreiterung 15 - eine senkrecht zur Längsschnitt-Mittelebene E₁ ermittelte Breite b_{E} (Fig. 2) von 0,4 mm bis 1,2 mm, insbesondere von bis zu 0,8 mm, sowie in radialer Richtung an seiner tiefsten Stelle eine Tiefe t_{E} (Fig. 3) von 70% bis 100% der Profiltiefe T_{P} (Fig. 3) auf. Bevorzugter Weise beträgt die Tiefe t_{E} höchstens der um 1,0 mm verringerten Profiltiefe T_{P}. Die Einschnittwände 12 sind im Bereich außerhalb der Kanäle 14 und der nutförmige Einschnittverbreiterung 15 unstrukturierte, ebene Flächen.

Gemäß Fig. 2 verläuft die Einschnittverbreiterung 15, in Draufsicht betrachtet, gerade sowie über den gesamten Einschnitt 10, ist - entsprechend der erwähnten symmetrischen Ausgestaltung des Einschnittes 10 - bezüglich der Längsschnitt-Mittelebene E₁ symmetrisch ausgeführt und von der Querschnitt-Mittelebene E₂ in ihrer Längserstreckung halbiert. Die Einschnittverbreiterung 15 ist, im Querschnitt betrachtet, rechteckig oder U-förmig ausgeführt, ist ferner durch zwei insbesondere in radialer Richtung verlaufende Seitenflächen 15b (Fig. 3) sowie in radialer Richtung durch einen Boden 15a (Fig. 3) begrenzt und weist in der Längsschnitt-Mittelebene E₁ in radialer Richtung eine Tiefe t_{N} (Fig. 4) von 10% bis 30%, insbesondere von 15% bis 25%, der Tiefe t_{E} (Fig. 3) des Einschnittes 10 sowie eine senkrecht zur Längsschnitt-Mittelebene E₁ ermittelte Breite b_{N} von 250% bis 370%, insbesondere von 290% bis 330%, der Breite b_{E} der Einschnittes 10 auf.

Die zwei Kanäle 14 sind jeweils bezüglich der Längsschnitt-Mittelebene E₁ symmetrisch ausgeführt, wobei der eine Kanal 14 zum anderen Kanal 14 symmetrisch bezüglich der Querschnitt-Mittelebene E₂ (Fig. 3) ausgebildet ist, sodass sich der eine Kanal 14 in der einen durch die Querschnitt-Mittelebene E₂ definierten Hälfte des Einschnittes 10 und der andere Kanal 14 in der anderen durch die Querschnitt-Mittelebene E₂ definierten Hälfte des Einschnittes 10 befindet (Fig. 3). Gemäß Fig. 3 geht jeder Kanal 14 vom Boden 15a der Einschnittverbreiterung 15 aus, mündet in den radial inneren Kanalbereich 4^{III} der entsprechenden mittleren Umfangsrille 4, ist durch eine an der einen Einschnittwand 12 ausgebildete Vertiefung 14' (Fig. 2) und eine an der anderen Einschnittwand 12 ausgebildeten Vertiefung 14' (Fig. 2) gebildet, verläuft halb U-förmig und weist einen kreisförmigen Querschnitt, eine durch seine Mitte verlaufende Hauptachse a_{K} sowie einen Durchmesser d_{K} von 250% bis 370%, insbesondere von 290% bis 330%, der Breite b_{E} (Fig. 2) des Einschnittes 10 auf. Der Durchmesser d_{K} des Kanals 14 stimmt vorzugsweise mit der Breite b_{N} (Fig. 2) der Einschnittverbreiterung 15 überein.

Gemäß Fig. 4 setzt sich jeder Kanal 14 beim gezeigten Ausführungsbeispiel aus einem vom Boden 15a der Einschnittverbreiterung 15 ausgehenden, radial äußeren Kanalabschnitt 14a, einem mittleren Kanalabschnitt 14b und einem Kanalendabschnitt 14c zusammen, wobei der radial äußere Kanalabschnitt 14a eine am Nutgrund 15a liegende Kanalöffnung 14d und der Kanalendabschnitt 14c eine am radial inneren Wandabschnitt 9a der entsprechenden Kanalwand 9 des radial inneren Kanalbereiches 4^{III} befindliche Kanalöffnung 14e aufweist. Die Kanalöffnung 14d weist - bezogen auf die Hauptachse a_{K} - zur mittleren Umfangsrille 4, in welche der Kanal 14 einmündet, einen in die Laufstreifenperipherie projizierten in axialer Richtung ermittelten Abstand a₂ (Fig. 2) von 10% bis 40%, insbesondere von 15% bis 30%, besonders bevorzugt von 20% bis 25%, der Breite b_{PR} (Fig. 2) der mittleren Profilrippe 1 auf.

Der Kanalabschnitt 14a verläuft bezogen auf die Hauptachse a_{K} gerade sowie zur radialen Richtung unter einem Winkel δ von 15° bis 40°, insbesondere von 20° bis 30°. Der mittlere Kanalabschnitt 14b verläuft bezogen auf die Hauptachse a_{K} insgesamt bogenförmig und setzt sich aus vier Kanalunterabschnitten 14b' zusammen, welche bezogen auf die Hauptachse a_{K} entlang von Kreisbögen verschiedener Radien verlaufen. Der Kanalendabschnitt 14c verläuft - bezogen auf die Hauptachse a_{K} - gerade sowie in einer in radialer Richtung ermittelten Tiefe t_{K} von 50% bis 100%, insbesondere von zumindest 60% der Tiefe t_{E} (Fig. 3) des Einschnittes 10, wobei die Tiefe t_{K} entsprechend auf die bereits erwähnte Erstreckungslänge l₃ des radial inneren Kanalbereiches 4^{III} abgestimmt ist.

Gemäß Fig. 3 endet beim gezeigten Ausführungsbeispiel der Einschnittgrund 11 an den Kanälen 14, wobei ferner angrenzend an jeden Kanal 14 eine den Einschnittgrund 11 abschnittweise in radialer Richtung gegenüber der Tiefe t_{E} anhebende, bis zu den Einschnittwänden 12 reichende Grundanhebung 16 ausgebildet ist.

Wie Fig. 1 zeigt, mündet bei den in der mittleren Profilrippe 2 ausgebildeten Einschnitten 10 der jeweils weiter laufstreifenaußenseitig verlaufende Kanal 14 über die jeweilige Rillenflanke 5b in die entsprechende schulterseitige Umfangsrille 5 ein.

Wie Fig. 2 und Fig. 4 insbesondere in Kombination zeigen, befinden sich die bereits erwähnten, paarweise ausgebildeten Einbuchtungen 13 an den an der mittleren Umfangsrille 4 liegenden Einmündungen der Einschnitte 10. Die zu jeweils einem Paar gehörenden Einbuchtungen 13 bilden eine in Draufsicht kreisförmige Aussparung 13' (Fig. 2), welche bis zum Kanalbereich 4^{III} reicht (Fig. 4) und einen Durchmesser d_{A} (Fig. 4) von 200% bis 400%, insbesondere von 330% bis 370%, der Breite b₂ (Fig 4) des mittleren Abschnittes 4^{II} der Umfangsrille 4 aufweist.

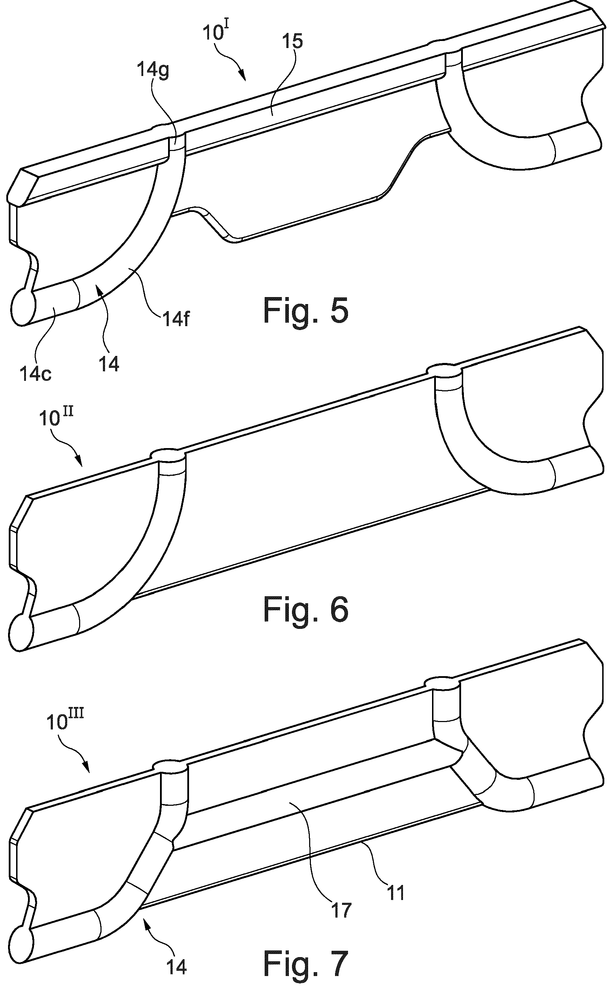

Fig. 5 bis Fig. 7 zeigen Visualisierungen von Einschnitten 10^{I} (Fig. 5), 10^{II} (Fig. 6), 10^{III} (Fig. 7), welche Varianten des Einschnittes 10 sind.

Der in Fig. 5 gezeigten Einschnitt 10^{I} unterscheidet sich vom Einschnitt 10 dadurch, dass sich jeder Kanal 14 aus einem durchgehend und einheitlich gebogenen, des Großteil des Kanals 14 einnehmenden, mittleren Kanalabschnitt 14f, einen Kanalendabschnitt 14c und einen bis zur Laufstreifenperipherie reichenden, ausschließlich im Bereich der Einschnittverbreiterung 15 ausgebildeten und in radialer Richtung verlaufenden, radial äußeren Kanalabschnitt 14g zusammensetzt.

Der in Fig. 6 gezeigte Einschnitt 10^{II} unterscheidet sich vom Einschnitt 10^{I} dadurch, dass keine Grundanhebungen 16 (Fig. 3) und keine Einschnittverbreiterung 15 (Fig. 3) vorgesehen sind bzw. ist.

Bei dem in Fig. 7 gezeigten Einschnitt 10^{III} setzt sich jeder Kanal 14 aus fünf Kanalabschnitten - drei gerade verlaufende und zwei gebogen verlaufende Kanalabschnitten - zusammen, wobei jeweils ein gerade verlaufender Kanalabschnitt abwechselnd auf einen gebogen verlaufenden Kanalabschnitt folgt. Ferner ist zwischen den beiden Kanälen 14 ein den Einschnitt 10^{III} lokal verbreiternder Verbindungskanal 17 ausgebildet, welcher in einer in radialer Richtung ermittelten konstanten Tiefe verläuft und sowohl zur Laufstreifenperipherie als auch zum Einschnittgrund 11 in radialer Richtung jeweils einen Abstand aufweist.

Die Erfindung ist auf die beschriebenen Ausführungsbeispiele nicht beschränkt.

Die Profilrippe kann mit gegenüber den Einschnitten breiter ausgeführten Querrillen versehen sein. Die Einschnitte können auch in schulterseitigen Profilrippen ausgebildet und ferner jeweils nur mit einem einzigen Kanal versehen sein. Ferner müssen die Einschnitte in Draufsicht nicht parallel zueinander verlaufen. Der Kanal bzw. die Kanäle kann bzw. können in einem in radialer Richtung ermittelten Abstand vom Einschnittgrund in die jeweilige Umfangsrille einmünden. Der radial äußere, sich V-förmig zur Laufstreifenperipherie verbreiternde Abschnitt 4^{I} der Umfangsrille(n) ist optional.

### Bezugsziffernliste

- 1: zentrale Profilrippe
- 1a: Rippenblock
- 2: mittlere Profilrippe
- 2a: Rippenblock
- 3: schulterseitige Profilrippe
- 4: mittlere Umfangsrille
- 4^{I}: radial äußerer Abschnitt
- 4^{II}: mittlerer Abschnitt
- 4^{III}: radial innerer Kanalbereich
- 5: schulterseitige Umfangsrille
- 5a: Rillengrund
- 5b: Rillenflanke
- 6: Flanke
- 7: Flanke
- 8: Kanalgrund
- 9: Kanalwand
- 9a: radial innerer Wandabschnitt
- 9b: radial äußerer Wandabschnitt
- 10, 10^{I}, 10^{II}, 10^{III}: Einschnitt
- 11: Einschnittgrund
- 12: Einschnittwand
- 13: Einbuchtung
- 13': Aussparung
- 14: Kanal
- 14a: radial äußerer Kanalabschnitt
- 14b: mittlerer Kanalabschnitt
- 14b': Kanalunterabschnitt
- 14c: Kanalendabschnitt
- 14d: Kanalöffnung
- 14e: Kanalöffnung
- 14f: mittlerer Kanalabschnitt
- 14g: radial äußerer Kanalabschnitt
- 14': Vertiefung
- 15: Einschnittverbreiterung
- 15a: Boden
- 15b: Seitenfläche
- 16: Grundanhebung
- 17: Verbindungskanal
- A-A: Linie (Reifenäquatorialebene)
- a₁, a₂: Abstand
- a_{K}: Hauptachse
- b₁,b₂,b₃: Breite
- b_{E}, b_{N}: Breite
- b_{PR}: Breite
- d_{A}, d_{K}: Durchmesser
- E₁: Längsschnitt-Mittelebene
- E₂: Querschnitt-Mittelebene
- l₁, l₂, l₃: Erstreckungslänge
- t_{E}, t_{N}, t_{K}: Tiefe
- T_{P}: Profiltiefe
- Z₂, Z₄: Detail
- α, β, γ, δ: Winkel

## Patentansprüche

1. Fahrzeugluftreifen, insbesondere Nutzfahrzeugreifen, mit einem Laufstreifen mit mindestens einer an zumindest einer Seite von einer Umfangsrille (4) begrenzten Profilrippe (1), wobei die Umfangsrille (4), im Querschnitt betrachtet, einen in radialer Richtung verlaufenden Abschnitt (4^{II}) mit einer Breite (b₂) von bis zu 3,0 mm und einen an diesen anschließenden radial inneren Kanalbereich (4^{III}) aufweist, wobei der radial innere Kanalbereich (4^{III}) von zwei Kanalwänden (9) und einem den Rillengrund bildenden Kanalgrund (8) begrenzt ist und - jeweils gegenüber dem in radialer Richtung verlaufenden Abschnitt (4^{II}) - eine größere Querschnittsfläche aufweist und breiter ausgeführt ist, wobei die Profilrippe (1) über ihren Umfang mit in die Umfangsrille (4) einmündenden, zur axialen Richtung unter einem Winkel (γ) von 0° bis 50° verlaufenden sowie Einschnittwände (12) aufweisenden Einschnitten (10, 10^{I}) versehen ist, wobei jeder Einschnitt (10, 10^{I}) durch zumindest einen zur Laufstreifenperipherie offenen, in den radial inneren Kanalbereich (4^{III}) der Umfangsrille (4) einmündenden Kanal (14) lokal verbreitert ist, wobei der Kanal (14) von einer an der einen Einschnittwand (12) ausgebildeten Vertiefung (14') und einer dieser gegenüberliegenden an der anderen Einschnittwand (12) ausgebildeten Vertiefung (14') gebildet ist,
**dadurch gekennzeichnet,**
**dass** die Einschnitte (10, 10^{I}) eine Breite (b_{E}) von 0,4 mm bis 1,2 mm und eine maximale Tiefe (t_{E}) von 70% bis 100% der Profiltiefe (T_{P}) aufweisen, wobei jeder Einschnitt (10, 10^{I}) an der Laufstreifenperipherie eine in Draufsicht über seine gesamte Erstreckung verlaufende, nutförmige Einschnittverbreiterung (15) mit einem Boden (15a), einer in radialer Richtung ermittelten Tiefe (t_{N}) von 10% bis 30% der maximalen Tiefe (t_{E}) des Einschnittes (10, 10^{I}) und einer Breite (b_{N}) von 250% bis 370% der Breite (b_{E}) des Einschnittes (10, 10^{I}) aufweist, wobei der Kanal (14) vom Boden (15a) der Einschnittverbreiterung (15) ausgeht.

2. Fahrzeugluftreifen nach Anspruch 1, **dadurch gekennzeichnet, dass** die Tiefe (t_{N}) der Einschnittverbreiterung (15) 15% bis 25% der maximalen Tiefe (t_{E}) des Einschnittes (10, 10^{I}) und die Breite (b_{N}) der Einschnittverbreiterung (15) 290% bis 330% der Breite (b_{E}) des Einschnittes (10, 10^{I}) beträgt.

3. Fahrzeugluftreifen nach Anspruch 1 oder 2, **dadurch gekennzeichnet, dass** der Kanal (14) einen kreisförmigen Querschnitt mit einem Durchmesser (d_{K}) von 250% bis 370%, insbesondere von 290% bis 330%, der Breite (b_{E}) des Einschnittes (10, 10^{I}, 10^{II},10^{III}) aufweist.

4. Fahrzeugluftreifen nach Anspruch 2 und 3, **dadurch gekennzeichnet, dass** der Durchmesser (d_{K}) des Kanals (14) mit der Breite (b_{N}) der Einschnittverbreiterung (15) übereinstimmt.

5. Fahrzeugluftreifen nach einem der Ansprüche 1 bis 4, **dadurch gekennzeichnet, dass** der Kanal (14), bei Sicht auf die Einschnittwand, halb U-förmig verläuft.

6. Fahrzeugluftreifen nach einem der Ansprüche 1 bis 5, **dadurch gekennzeichnet, dass** die Breite (b₂) des in radialer Richtung verlaufenden Abschnittes (4^{II}) der Umfangsrille (4), welche die Profilrippe (1) an ihrer einen Seiten begrenzt, 0,5 mm bis 2,5 mm, besonders bevorzugt von 0,8 mm bis 1,2 mm, beträgt.

7. Fahrzeugluftreifen nach einem der Ansprüche 1 bis 6, **dadurch gekennzeichnet, dass** die zumindest eine Profilrippe (1, 2) an ihrer zweiten Seite ebenfalls von einer Umfangsrille (4, 5) begrenzt ist.

8. Fahrzeugluftreifen nach Anspruch 7, **dadurch gekennzeichnet, dass** sich die Umfangsrille (4), welche die zumindest eine Profilrippe (1) an ihrer zweiten Seite begrenzt, im Querschnitt betrachtet, ebenfalls einen in radialer Richtung verlaufenden Abschnitt (4^{II}) mit einer Breite (b₂) von bis zu 3,0 mm und einen an diesen anschließenden radial inneren Kanalbereich (4^{III}) mit zwei Kanalwänden (9) und einem den Rillengrund bildenden Kanalgrund (8) aufweist, wobei der Kanalbereich (4^{III}) - jeweils gegenüber dem in radialer Richtung verlaufenden Abschnitt (4^{II}) - eine größere Querschnittsfläche aufweist und breiter ausgeführt ist, wobei die in der Profilrippe (1) ausgebildeten Einschnitte (10, 10^{I}) bezüglich einer in radialer Richtung ausgerichteten Querschnitt-Mittelebene (E₂), welche - bezogen auf die Längserstreckung - durch die Mitte des Einschnittes (10, 10^{I}) verläuft, symmetrisch gestaltet sind.

9. Fahrzeugluftreifen nach Anspruch 8, **dadurch gekennzeichnet, dass** zwischen den Kanälen (14) ein insbesondere in einer konstanten Tiefe verlaufender, den Einschnitt lokal verbreiternder Verbindungskanal (17) ausgebildet ist, welcher sowohl zur Laufstreifenperipherie als auch zum Einschnittgrund (11) in radialer Richtung jeweils einen Abstand aufweist.

10. Fahrzeugluftreifen nach Anspruch 8 oder 9, **dadurch gekennzeichnet, dass** die Breite (b₂) des in radialer Richtung verlaufenden Abschnittes (4^{II}) der Umfangsrille (4), welche die zumindest eine Profilrippe (1) an ihrer zweiten Seite begrenzt, 0,5 mm bis 2,5 mm, bevorzugt von 0,8 mm bis 1,2 mm, beträgt.

11. Fahrzeugluftreifen nach einem der Ansprüche 1 bis 10, **dadurch gekennzeichnet, dass** die Umfangsrille(n) (4), welche den in radialer Richtung verlaufenden Abschnitt (4^{II}) und den radial inneren Kanalbereich (4^{III}) aufweist bzw. aufweisen, an den Einmündungen der Einschnitte (10, 10^{I}) mit in Draufsicht kreisförmigen, in radialer Richtung verlaufenden, bis zum radial inneren Kanalbereich (4^{III}) reichenden, zur Laufstreifenperipherie geöffneten Aussparungen (13') mit einem Durchmesser (d_{A}) von 200% bis 400%, insbesondere von 330% bis 370%, der Breite (b₂) des in radialer Richtung verlaufenden Abschnittes (4^{II}) versehen sind, wobei die Aussparungen (13') jeweils aus in axialer Richtung einander paarweise gegenüberliegenden Einbuchtungen (13) gebildet sind.

12. Fahrzeugluftreifen nach einem der Ansprüche 1 bis 11, **dadurch gekennzeichnet, dass** sich die Kanalwände (9) des radial inneren Kanalbereiches (4^{III}) der Umfangsrille(n) (4) jeweils aus einem radial inneren Wandabschnitt (9a) und einem radial äußeren Wandabschnitt (9b) zusammensetzen, wobei die radial inneren Wandabschnitte (9a), im Querschnitt durch die Umfangsrille (4) betrachtet, zur radialen Richtung jeweils unter einem Winkel (β) von 5° bis 15°, insbesondere von bis 10°, verlaufen, wobei diese derart gegensinnig zueinander geneigt sind, dass sich der radial innere Kanalbereich (4^{III}) vom radial inneren Ende der radial inneren Wandabschnitte (9a) zum radial äußeren Ende der radial inneren Wandabschnitte (9a) in axialer Richtung kontinuierlich verbreitert, wobei der Kanal (14) bzw. die Kanäle (14), welche(r) den Einschnitt (10, 10^{I}) verbreitert bzw. verbreitern, über den radial inneren Wandabschnitt (9a) in den radial inneren Kanalbereich (4^{III}) der Umfangsrille(n) (4) einmündet bzw. einmünden.

13. Fahrzeugluftreifen nach einem der Ansprüche 1 bis 12, **dadurch gekennzeichnet, dass** sich die Umfangsrille(n) (4), welche den in radialer Richtung verlaufenden Abschnitt (4^{II}) und den radial inneren Kanalbereich (4^{III}) aufweist bzw. aufweisen, aus dem in radialer Richtung verlaufenden Abschnitt (4^{II}), dem radial inneren Kanalbereich (4^{III}) und einem sich V-förmig zur Laufstreifenperipherie verbreiternden, radial äußeren Abschnitt (4^{I}) zusammensetzt bzw. zusammensetzen.

14. Fahrzeugluftreifen nach einem er Ansprüche 1 bis 13, **dadurch gekennzeichnet, dass** der Kanal (14) eine Hauptachse (a_{K}) und eine radial äußere Kanalöffnung (14d) aufweist, wobei die radial äußere Kanalöffnung (14d) - bezogen auf die Hauptachse (a_{K}) - zur Umfangsrille (4), in welche der Kanal (14) einmündet, einen in die Laufstreifenperipherie projizierten in axialer Richtung ermittelten Abstand (a₂) von 10% bis 40%, insbesondere von 15% bis 30%, besonders bevorzugt von 20% bis 25%, der an der Laufstreifenperiphere in axialer Richtung ermittelten Breite (b_{PR}) der Profilrippe (1) aufweist.

15. Fahrzeugluftreifen nach einem der Ansprüche 1 bis 14, **dadurch gekennzeichnet, dass** die Einschnitte (10) jeweils einen Einschnittgrund (11) sowie pro Kanal (14) eine an diesen angrenzende, den Einschnittgrund (11) lokal in radialer Richtung anhebende Grundanhebung (16) aufweisen.

## Claims

1. Pneumatic tyre for a vehicle, in particular utility vehicle tyre, with a tread having at least one profile rib (1), which is delimited on at least one side by a circumferential groove (4), wherein the circumferential groove (4) has, when viewed in cross section, a portion (4^{II}) running in the radial direction and having a width (b₂) of up to 3.0 mm and, adjoining it, a radially inner channel region (4^{III}), wherein the radially inner channel region (4^{III}) is delimited by two channel walls (9) and a channel base (8) forming the groove base, and has a larger cross-sectional area and is made wider in each case than the portion (4^{II}) running in the radial direction,
wherein the profile rib (1) is provided over its circumference with sipes (10, 10^{I})), which merge into the circumferential groove (4), run at an angle (γ) of 0° to 50° with respect to the axial direction and have sipe walls (12), wherein each sipe (10, 10^{I}) is locally widened by at least one channel (14) which is open to the tread periphery and merges into the radially inner channel region (4^{III}) of the circumferential groove (4), wherein the channel (14) is formed by a depression (14') formed in one sipe wall (12) and a depression (14') formed in the other sipe wall (12), opposite the first depression,
**characterized**
**in that** the sipes (10, 10^{I}) have a width (b_{E}) of 0.4 mm to 1.2 mm and a maximum depth (t_{E}) of 70% to 100% of the profile depth (T_{P}), wherein each sipe (10, 10^{I}) has, at the tread periphery, a slot-shaped sipe widening (15) which runs over its entire extent in plan view and has a bottom (15a), a depth (t_{N}), determined in the radial direction, of 10% to 30% of the maximum depth (t_{E}) of the sipe (10, 10^{I}) and a width (b_{N}) of 250% to 370% of the width (b_{E}) of the sipe (10, 10^{I}), wherein the channel (14) starts from the bottom (15a) of the sipe widening (15).

2. Pneumatic tyre according to Claim 1 for a vehicle, **characterized in that** the depth (t_{N}) of the sipe widening (15) is 15% to 25% of the maximum depth (t_{E}) of the sipe (10, 10^{I}) and the width (b_{N}) of the sipe widening (15) is 290% to 330% of the width (b_{E}) of the sipe (10, 10^{I}).

3. Pneumatic tyre according to Claim 1 or 2 for a vehicle, **characterized in that** the channel (14) has a circular cross section with a diameter (d_{K}) of 250% to 370%, in particular of 290% to 330%, of the width (b_{E}) of the sipe (10, 10^{I}, 10^{II}, 10^{III}).

4. Pneumatic tyre according to Claims 2 and 3 for a vehicle, **characterized in that** the diameter (d_{K}) of the channel (14) coincides with the width (b_{N}) of the sipe widening (15).

5. Pneumatic tyre according to one of Claims 1 to 4 for a vehicle, **characterized in that** the channel (14) is half U-shaped in a view towards the sipe wall.

6. Pneumatic tyre according to one of Claims 1 to 5 for a vehicle, **characterized in that** the width (b₂) of the radially extending portion (4^{II}) of the circumferential groove (4) which delimits the profile rib (1) on one side thereof is 0.5 mm to 2.5 mm, particularly preferably from 0.8 mm to 1.2 mm.

7. Pneumatic tyre according to one of Claims 1 to 6 for a vehicle, **characterized in that** the at least one profile rib (1, 2) is likewise delimited on the second side thereof by a circumferential groove (4, 5).

8. Pneumatic tyre according to Claim 7 for a vehicle, **characterized in that** the circumferential groove (4) which delimits the at least one profile rib (1) on the second side thereof likewise has, when viewed in cross section, a portion (4^{II}) running in the radial direction and having a width (b₂) of up to 3.0 mm and, adjoining it, a radially inner channel region (4^{III}) having two channel walls (9) and a channel base (8) forming the groove base, wherein the channel region (4^{III}) has a larger cross-sectional area and is made wider in each case than the portion (4^{II}) running in the radial direction, wherein the sipes (10, 10^{I}) formed in the profile rib (1) are of symmetrical configuration in relation to a cross-section centre plane (E₂) which is aligned in the radial direction and - with reference to the longitudinal extent - runs through the centre of the sipe (10, 10^{I}).

9. Pneumatic tyre according to Claim 8 for a vehicle, **characterized in that** a connecting channel (17), which, in particular, runs at a constant depth, locally widens the sipe and is at a distance in the radial direction both from the tread periphery and from the sipe base (11), is formed between the channels (14).

10. Pneumatic tyre according to Claim 8 or 9 for a vehicle, **characterized in that** the width (b₂) of the radially extending portion (4^{II}) of the circumferential groove (4) which delimits the at least one profile rib (1) on the second side thereof is 0.5 mm to 2.5 mm, preferably from 0.8 mm to 1.2 mm.

11. Pneumatic tyre according to one of Claims 1 to 10 for a vehicle, **characterized in that** the circumferential groove(s) (4), which has or have the portion (4^{II}) running in the radial direction and the radially inner channel region (4^{III}), is or are provided at the entries of the sipes (10, 10^{I}) with recesses (13') having a diameter (d_{A}) of 200% to 400%, in particular of 330% to 370%, of the width (b₂) of the portion (4^{II}) running in the radial direction, which recesses are circular in plan view, run in the radial direction, extend as far as the radially inner channel region (4^{III}), and are open to the tread periphery, wherein the recesses (13') are each formed by indentations (13) that lie opposite one another in pairs in the axial direction.

12. Pneumatic tyre according to one of Claims 1 to 11 for a vehicle, **characterized in that** the channel walls (9) of the radially inner channel region (4^{III}) of the circumferential groove(s) (4) are each composed of a radially inner wall portion (9a) and a radially outer wall portion (9b), wherein the radially inner wall portions (9a), when viewed in a cross section through the circumferential groove (4), each run at an angle (β) of 5° to 15°, in particular of up to 10°, with respect to the radial direction, wherein they are inclined in opposite directions with respect to one another in such a way that the radially inner channel region (4^{III}) widens continuously in the axial direction from the radially inner end of the radially inner wall portions (9a) to the radially outer end of the radially inner wall portions (9a), wherein the channel (14) or channels (14), which widens or widen the sipe (10, 10^{I}), merges or merge via the radially inner wall portion (9a) into the radially inner channel region (4^{III}) of the circumferential groove(s) (4).

13. Pneumatic tyre according to one of Claims 1 to 12 for a vehicle, **characterized in that** the circumferential groove(s) (4), which has or have the portion (4^{II}) running in the radial direction and the radially inner channel region (4^{III}), is or are composed of the portion (4^{II}) running in the radial direction, the radially inner channel region (4^{III}), and a radially outer portion (4^{I}) widening in a V shape towards the tread periphery.

14. Pneumatic tyre according to one of Claims 1 to 13 for a vehicle, **characterized in that** the channel (14) has a main axis (a_{K}) and a radially outer channel opening (14d), wherein - with reference to the main axis (a_{K}) - the radially outer channel opening (14d) is at a distance (a₂), projected into the tread periphery and determined in the axial direction, of 10% to 40%, in particular of 15% to 30%, particularly preferably of 20% to 25%, of the width (b_{PR}) of the profile rib (1), determined in the axial direction at the tread periphery, from the circumferential groove (4) into which the channel (14) merges.

15. Pneumatic tyre according to one of Claims 1 to 14 for a vehicle, **characterized in that** the sipes (10) each have a sipe base (11) and, for each channel (14), a base elevation (16) adjacent to said channel and locally raising the sipe base (11) in the radial direction.

## Revendications

1. Pneumatique pour véhicule, en particulier pour véhicule utilitaire, comprenant une bande de roulement ayant au moins une nervure profilée (1) délimitée au moins d'un côté par une rainure circonférentielle (4), la rainure circonférentielle (4), vue en coupe transversale, comprenant une partie (4^{II}) s'étendant dans la direction radiale avec une largeur (b₂) allant jusqu'à 3,0mm et une zone de canal radialement intérieure (4^{III}) qui s'y raccorde, la zone de canal radialement intérieure (4^{III}) étant délimitée par deux parois (9) de canal et un fond de canal (8) formant le fond de la rainure et présentant - par rapport à la partie (4^{II}) s'étendant dans la direction radiale - une surface en section transversale plus grande, et étant réalisée plus large,
la nervure profilée (1) présentant, sur son pourtour, des incisions (10, 10^{I}) débouchant dans la rainure circonférentielle (4), s'étendant selon un angle (γ) allant de 0° à 50° par rapport à la direction axiale, et comprenant des parois (12) d'incision, chaque incision (10, 10^{I}) étant localement élargie par au moins un canal (14) ouvert sur la périphérie de la bande de roulement et débouchant dans la zone de canal radialement intérieure (4^{III}) de la rainure périphérique (4), le canal (14) étant formé par un évidement (14') formé sur une paroi (12) d'incision et par un évidement (14') opposé à celui-ci, formé dans l'autre paroi (12) d'incision,
**caractérisé**
**en ce que** les incisions (10, 10^{I}) présentent une largeur (b_{E}) comprise entre 0,4mm et 1,2mm et une profondeur maximale (t_{E}) comprise entre 70% et 100% de la profondeur de profil (T_{P}), chaque incision (10, 10^{I}) présentant, sur la périphérie de la bande de roulement, un élargissement (15) d'incision en forme de rainure s'étendant, en vue de dessus, sur toute sa longueur, comprenant un fond (15a), une profondeur (t_{N}) déterminée dans la direction radiale allant de 10% à 30% de la profondeur maximale (t_{E}) de l'incision (10, 10^{I}) et une largeur (b_{N}) allant de 250% à 370% de la largeur (b_{E}) de l'incision (10, 10^{I}), le canal (14) partant du fond (15a) de l'élargissement (15) de rainure.

2. Pneumatique pour véhicule selon la revendication 1, **caractérisé en ce que** la profondeur (t_{N}) de l'élargissement (15) d'incision est comprise entre 15% et 25% de la profondeur maximale (t_{E}) de l'incision (10, 10^{I}) et la largeur (b_{N}) de l'élargissement (15) d'incision est comprise entre 290% et 330% de la largeur (b_{E}) de l'incision (10, 10^{I}).

3. Pneumatique pour véhicule selon la revendication 1 ou la revendication 2, **caractérisé en ce que** le canal (14) présente une section transversale circulaire avec un diamètre (d_{K}) compris entre 250% et 370%, en particulier compris entre 290% et 330%, de la largeur (b_{E}) de l'incision (10, 10^{I}, 10^{II}, 10^{III}).

4. Pneumatique pour véhicule selon les revendications 2 et 3, **caractérisé en ce que** le diamètre (d_{K}) du canal (14) correspond à la largeur (b_{N}) de l'élargissement (15) d'incision.

5. Pneumatique pour véhicule selon l'une des revendications 1 à 4, **caractérisé en ce que** le canal (14), vu sur la paroi de l'incision, a une forme en semi-U.

6. Pneumatique pour véhicule selon l'une des revendications 1 à 5, **caractérisé en ce que** la largeur (b₂) de la partie (4^{II}) s'étendant dans la direction radiale de la rainure circonférentielle (4) qui délimite la nervure profilée (1) sur l'un des côtés de celle-ci est comprise entre 0,5mm et 2,5mm, de préférence entre 0,8mm et 1,2mm.

7. Pneumatique pour véhicule selon l'une des revendications 1 à 6, **caractérisé en ce que** ladite au moins une nervure de profil (1, 2) est également délimitée sur son deuxième côté par une rainure circonférentielle (4, 5).

8. Pneumatique pour véhicule selon la revendication 7, **caractérisé en ce que** la rainure circonférentielle (4) qui délimite ladite au moins une nervure profilée (1) sur son deuxième côté vu en coupe transversale, comprend également une partie (4^{II}) s'étendant dans la direction radiale avec une largeur (b₂) allant jusqu'à 3,0mm et une zone de canal (4^{III}) radialement intérieure adjacente à celle-ci avec deux parois (9) de canal et un fond de canal (8) formant le fond de la rainure, la zone de canal (4^{III}) comprenant, dans chaque cas par rapport à la partie (4^{II}) s'étendant dans la direction radiale, une plus grande surface de section transversale et étant réalisée plus large, les incisions (10, 10^{I}) formées dans la nervure profilée (1) étant symétriques par rapport à un plan médian de section transversale (E₂) orienté dans la direction radiale, qui s'étend - par rapport à l'extension longitudinale - à travers le centre de l'incision (10, 10^{I}).

9. Pneumatique pour véhicule selon la revendication 8, **caractérisé en ce qu'**entre les canaux (14) est formé un canal de liaison (17) s'étendant notamment à une profondeur constante et élargissant localement l'incision, lequel canal de liaison présente une distance dans la direction radiale tant par rapport à la périphérie de la bande de roulement que par rapport au fond (11) de l'incision.

10. Pneumatique pour véhicule selon la revendication 8 ou la revendication 9, **caractérisé en ce que** la largeur (b₂) de la partie (4^{II}) s'étendant dans la direction radiale de la rainure circonférentielle (4) qui délimite ladite au moins une nervure profilée (1) sur son deuxième côté est comprise entre 0,5mm et 2,5mm, de préférence entre 0,8mm et 1,2mm.

11. Pneumatique pour véhicule selon l'une des revendications 1 à 10, **caractérisé en ce que** la ou les rainures circonférentielles (4), qui comprennent la partie (4^{II}) s'étendant dans la direction radiale et la zone de canal radialement intérieure (4^{III}), présentent, aux embouchures des incisions (10, 10^{I}), des évidements (13') de forme circulaire en vue de dessus, s'étendant dans la direction radiale, s'étendant jusqu'à la zone de canal radialement intérieure (4^{III}) et étant ouverts vers la périphérie de la bande de roulement, ayant un diamètre (d_{A}) compris entre 200% et 400%, en particulier entre 330% et 370%, de la largeur (b₂) de la partie (4^{II}) s'étendant dans la direction radiale, les évidements (13') étant formés chacun par des renfoncements (13) opposés par paires dans la direction axiale.

12. Pneumatique pour véhicule selon l'une des revendications 1 à 11, **caractérisé en ce que** les parois (9) de canal de la zone de canal radialement intérieure (4^{III}) de la ou des rainures circonférentielles (4) sont composées chacune d'une partie de paroi radialement intérieure (9a) et d'une partie de paroi radialement extérieure (9b), les parties de paroi radialement intérieures (9a), considérées en coupe transversale à travers la rainure circonférentielle (4), s'étendant chacune dans la direction radiale selon un angle (β) allant de 5° à 15°, en particulier allant jusqu'à 10°, celles-ci étant inclinées de manière opposée les unes par rapport aux autres de telle sorte que la zone de canal radialement intérieure (4^{III}) s'élargit de manière continue dans la direction axiale depuis l'extrémité radialement intérieure des parties de paroi radialement intérieures (9a) jusqu'à l'extrémité radialement extérieure des parties de paroi radialement intérieures (9a), le ou les canaux (14) qui élargissent l'incision (10, 10^{I}) s'élargissant, débouchant par la partie de paroi radialement intérieure (9a) dans la zone de canal radialement intérieure (4^{III}) de la ou des rainures circonférentielles (4).

13. Pneumatique pour véhicule selon l'une des revendications 1 à 12, **caractérisé en ce que** la ou les rainures circonférentielles (4), qui comprend (comprennent) la partie s'étendant dans la direction radiale (4^{II}) et la zone de canal radialement intérieure (4^{III}), est (sont) composée(s) de la partie s'étendant dans la direction radiale (4^{II}), de la zone de canal radialement intérieure (4^{III}) et d'une partie radialement extérieure (4^{I}) s'élargissant en forme de V vers la périphérie de la bande de roulement.

14. Pneumatique pour véhicule selon l'une des revendications 1 à 13, **caractérisé en ce que** le canal (14) comprend un axe principal (a_{K}) et une ouverture de canal radialement extérieure (14d), l'ouverture de canal radialement extérieure (14d)
- par rapport à l'axe principal (a_{K}) - présentant, par rapport à la rainure circonférentielle (4) dans laquelle débouche le canal (14), une distance (a₂) déterminée dans le sens axial, projetée dans la périphérie de la bande de roulement, comprise entre 10% et 40%, en particulier entre 15% et 30%, de manière particulièrement préférée entre 20% et 25%, de la largeur (b_{PR}) de la nervure profilée (1) déterminée dans la direction axiale au niveau de la périphérie de la bande de roulement.

15. Pneumatique pour véhicule selon l'une des revendications 1 à 14, **caractérisé en ce que** les incisions (10) comprennent chacune un fond (11) d'incision ainsi que, pour chaque canal (14), un rehaussement de fond (16), adjacent à celui-ci et rehaussant localement le fond (11) d'incision dans la direction radiale.
